# EUROPEAN PATENT APPLICATION

(11) **EP 4 647 373 A1**
(43) Date of publication of application: **12.11.2025**
(21) Application number: 24838920.7
(22) Date of filing: 22.08.2024
(51) Int. Cl.: B65G 47/91, B25J 15/06, B65B 35/18

(54) **MATERIAL TRANSFER APPARATUS**

(30) Priority: 18.10.2023 CN 202311352743
(71) Applicant: Eve Energy Co., Ltd., Huizhou, Guangdong 516006 (CN)
(72) Inventor: ZHU, Keke, Zone Huizhou, Guangdong 516006 (CN); CHEN, Huan, Zone Huizhou, Guangdong 516006 (CN); LIU, Mi, Zone Huizhou, Guangdong 516006 (CN); SONG, Pengyuan, Zone Huizhou, Guangdong 516006 (CN)
(74) Representative: Regimbeau
(86) International application number: PCT/CN2024/113983
(87) International publication number: WO 2025/011669

(57) **Abstract**

A material transfer apparatus includes: a frame, a suction shaft, a frame (1), a suction shaft (3), a rotating assembly (2) and a lifting assembly (5). The suction shaft (3) is provided with a first limit member (34). The rotating assembly (2) is arranged on the frame (1) and is configured to drive the suction shaft (3) to rotate in a circumferential direction of the suction shaft (3). The lifting assembly (5) is arranged on the frame (1) and is configured to drive the suction shaft (3) to move in an axial direction of the suction shaft (3) to approach or move away from a material (8). The lifting assembly (5) includes a second limit member (51) movably arranged on the frame (1), and the second limit member (51) and the first limit member (34) are in rolling contact and mutually limited in the axial direction of the suction shaft (3).

## Description

This application claims priority to Chinese patent application No. 202311352743.0 filed with the China National Intellectual Property Administration (CNIPA) on October 18, 2023, the disclosure of which is incorporated herein by reference in its entirety.

### TECHNICAL FIELD

The present application relates to the technical field of automated transfer equipment, and specifically to a material transfer apparatus.

### BACKGROUND

In automated production, it is usually necessary to transfer materials between different workstations, or to adjust the spatial position of materials, such as height or angle, at the same workstation.

### TECHNICAL PROBLEM

In the related technology, negative pressure suction heads are often used to absorb or grab materials, while the height and angle adjustment of materials are mostly carried out in separate processes, and the structure of the equipment used is complex and the production efficiency is low.

### SUMMARY

A material transfer apparatus is provided according to the present application, which includes: a frame, a suction shaft, a rotating assembly and a lifting assembly. The suction shaft is adjustably assembled on the frame and is provided with a first limit member. The rotating assembly is arranged on the frame and is configured to drive the suction shaft to rotate in a circumferential direction of the suction shaft. The lifting assembly is arranged on the frame and is configured to drive the suction shaft to move in an axial direction of the suction shaft to approach or move away from a material. The lifting assembly includes a second limit member movably arranged on the frame, and the second limit member and the first limit member are in rolling contact and mutually limited in the axial direction of the suction shaft.

In some implementations, the second limit member includes a body and two rolling elements arranged on the body in the axial direction of the suction shaft, and the first limit member is located between the two rolling elements and is in rolling abutment against the two rolling elements.

In some implementations, the body includes a notch groove arranged on a side of the body facing the suction shaft; the two rolling elements are arranged on each of two opposite inner walls of the notch groove in the axial direction of the suction shaft; and the suction shaft is at least partially located in the notch groove.

In some implementations, the first limit member is a fixed ring sleeved on the suction shaft.

In some implementations, the lifting assembly further includes a telescopic member, a fixed end of the telescopic member is connected to the frame, and a telescopic end of the telescopic member is connected to the second limit member; and the second limit member is slidably connected to the frame.

In some implementations, the material transfer apparatus further includes a buffer member arranged between the telescopic end of the telescopic member and the second limit member. The buffer member applies a damping force to the telescopic end of the telescopic member in response to the telescopic end of the telescopic member driving the suction shaft to approach and contact the material.

In some implementations, the buffer member includes a guide shaft, an elastic element, a first locking block and a second locking block. The guide shaft passes through and is slidably connected to the second limit member, the guide shaft is connected to the telescopic end of the telescopic member, an axial direction of the guide shaft is parallel to a telescopic direction of the telescopic end of the telescopic member. The first locking block and the second locking block are both arranged on the guide shaft, the first locking block is arranged on a side of the guide shaft close to the telescopic member, and the second limit member is arranged between the first locking block and the second locking block. The elastic element is arranged between the first locking block and the second limit member.

In some implementations, the material transfer apparatus further includes a force control sensor arranged between the telescopic end of the telescopic member and the guide shaft.

In some implementations, the second limit member is provided with a stepped hole on a side of the second limit member facing the first locking block, and the guide shaft passes through the second limit member via the stepped hole; and the elastic element is at least partially located in the stepped hole.

In some implementations, the stepped hole includes a first hole section, a second hole section and a third hole section whose inner diameters decrease successively. The guide shaft is slidably connected to an inner wall of the third hole section, a first step surface is formed between the first hole section and the second hole section and is configured to limit the first locking block, and a second step surface is formed between the second hole section and the third hole section and is configured to limit the elastic element.

In some implementations, the telescopic member includes a telescopic shaft connected to the force control sensor, the telescopic end of the telescopic member is an end of the telescopic shaft close to the force control sensor, and the telescopic shaft is coaxial with the guide shaft.

In some implementations, the rotating assembly includes a motor and a hollow reducer, the hollow reducer includes a housing, an input shaft, and a hollow output shaft. The input shaft and the hollow output shaft are rotatably connected to the housing, and the housing is mounted to the frame. An output shaft of the motor is connected to an input hole of the hollow reducer. The suction shaft is coaxial with the hollow output shaft and is embedded in the hollow output shaft, the suction shaft is a spline shaft, and a spline nut is fixed on the hollow output shaft and is assembled to the suction shaft.

In some implementations, the material transfer apparatus further includes: a photosensitive plate and a photoelectric switch. The photosensitive plate is arranged on the hollow output shaft or the spline nut; and the photoelectric switch is arranged on the frame, the housing, or the motor to cooperate with the photosensitive plate.

In some implementations, the material transfer apparatus further includes a sliding member. The second limit member is slidably connected to the frame through the sliding member. The sliding member includes a slide rail and a slider adapted to the slide rail, the slide rail is arranged on the frame, and the slider is arranged on the second limit member.

### BENEFICIAL EFFECTS

With the technical solutions of the embodiments of the present application, at least the following advantages and beneficial effects can be achieved:
In the present application, while the material is being adjusted in height and angle, the material is suctioned and fixed on the suction shaft. Therefore, the suction shaft can also complete circumferential rotation while performing axial movement, that is, the material can also be adjusted in angle while being adjusted in height, which realizes the integration of the height and angle adjustment of the material and greatly improves the production efficiency of the transfer apparatus. Both actions are realized by the same suction shaft, which simplifies the structure of the transfer apparatus. Moreover, the first limit member and the second limit member limit each other to realize the assembly and connection between the lifting assembly and the suction shaft. The rolling contact between the suction shaft and the lifting assembly can effectively reduce the friction between the suction shaft and the lifting assembly when the suction shaft performs circumferential rotation, which is conducive to improving the sensitivity of the circumferential rotation of the suction shaft and ensuring the accuracy of the circumferential rotation of the suction shaft, that is, the angle adjustment on the material.

### BRIEF DESCRIPTION OF DRAWINGS

FIG. 1 is a schematic front view of the structure of a material transfer apparatus according to an embodiment of the present application;
FIG. 2 is a schematic perspective view of the structure of a material transfer apparatus according to an embodiment of the present application;
FIG. 3 is a schematic partially enlarged view of the structure at A in FIG. 2;
FIG. 4 is a first schematic perspective view of the structure after a telescopic member and a second limit member are assembled in the present application;
FIG. 5 is a schematic diagram of the partial cross-sectional structure after the telescopic member and the second limit member are assembled in the present application;
FIG. 6 is a schematic partially enlarged view of the structure at B in FIG. 5; and
FIG. 7 is a second schematic perspective view of the structure after the telescopic member and the second limit member are assembled in the present application.

### Reference numerals list:

1 frame
11 vertical plate
12 horizontal plate
121 installation notch
2 rotating assembly
21 motor
22 hollow reducer
221 housing
222 hollow output shaft
3 suction shaft
31 spline nut
32 connecting plate
33 negative pressure suction head
34 first limit member
41 mounting plate
42 photoelectric switch
43 photosensitive plate
5 lifting assembly
51 second limit member
510 body
511 first hole section
512 second hole section
513 third hole section
514 notch groove
515 rolling element
52 telescopic member
521 telescopic shaft
53 buffer member
531 first locking block
532 guide shaft
533 elastic element
534 second locking block
54 sliding member
541 slider
542 slide rail
6 mechanical arm
7 platform
8 material
9 force control sensor
a first step surface
b second step surface.

### DETAILED DESCRIPTION

The technical solutions in the embodiments of the present application are described below in conjunction with the drawings in the embodiments of the present application.

In the description of this application, orientations or positional relationships indicated by the terms such as "upper", "lower", "front", "back", "left", "right", "vertical", "horizontal", "top", "bottom", "inside", "outside" are based on the orientations or positional relationships shown in the drawings, which are only for the convenience of describing the present application and simplifying the description, and do not indicate or imply that the device or element referred to must have a specific orientation, be constructed and operated in a specific orientation, and therefore cannot be understood as a limitation on the present application.

All technical and scientific terms used herein have the same meaning as those generally understood by the person skilled in the art of this application. The terms used herein in the specification of the present application are only for the purpose of describing embodiments and are not intended to limit the present application.

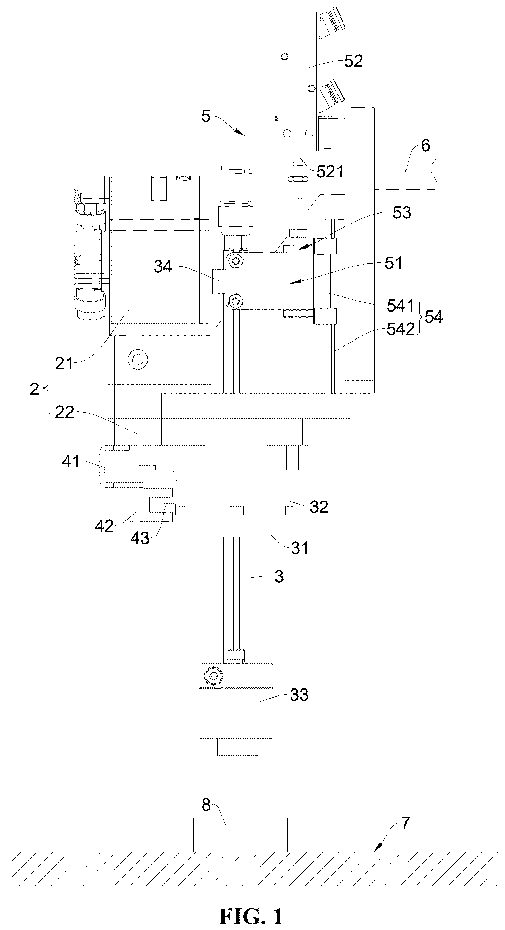

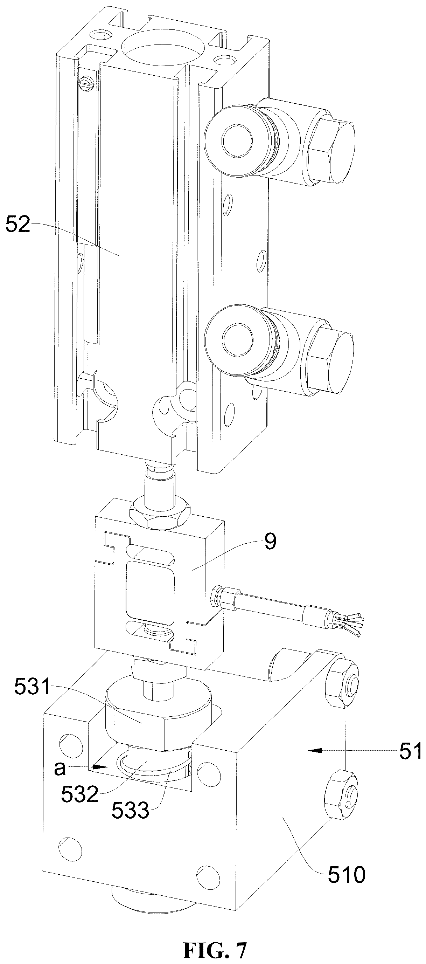

Reference is made to FIG. 1 to FIG. 7, a material transfer apparatus includes a frame 1, a suction shaft 3, a rotating assembly 2 and a lifting assembly 5. The suction shaft 3 is adjustably assembled on the frame 1 and is provided with a first limit member 34. The rotating assembly 2 is arranged on the frame 1 and is configured to drive the suction shaft 3 to rotate in a circumferential direction of the suction shaft 3. The lifting assembly 5 is arranged on the frame 1 and is configured to drive the suction shaft 3 to move in an axial direction of the suction shaft 3 to approach or move away from a material 8. The lifting assembly 5 includes a second limit member 51 movably arranged on the frame 1, and the second limit member 51 and the first limit member 34 are in rolling contact and mutually limited in the axial direction of the suction shaft 3.

In this embodiment, the frame 1 is used as the basis of the transfer apparatus and is configured to support and fix other components. The suction shaft 3 is hollow, one end of the suction shaft 3 is provided with a negative pressure suction head 33, and the other end of the suction shaft 3 is connected to a negative pressure generating apparatus, so that negative pressure can be generated at the negative pressure suction head 33 to suction or grab the material 8. During use of the material transfer apparatus, the rotating assembly 2 drives the suction shaft 3 to rotate in its circumferential direction to achieve the position adjustment of the material 8 in the circumferential direction of the suction shaft 3, that is, angle adjustment. The lifting assembly 5 drives the suction shaft 3 to move in its axial direction to achieve the position adjustment of the material 8 in the axial direction of the suction shaft 3, that is, height adjustment.

In practical application, the transfer apparatus can operate independently, for example, suction the material 8 on the platform 7, and after lifting the material 8 to a certain height in the axial direction of the suction shaft 3, drive the suction shaft 3 to rotate by a certain angle, and then replace the material 8 to the platform 7 to achieve the adjustment of the spatial position of the material 8 in the same workstation. Moreover, the transfer apparatus can also be used in conjunction with the mechanical arm 6, and the frame 1 can be installed on the mechanical arm 6 to achieve, in conjunction with the mechanical arm 6, the spatial position adjustment of the material 8 between different workstations, that is, to transfer the material 8. While the material 8 is being adjusted in height and angle, the material 8 is suctioned and fixed on the negative pressure suction head 33, that is, the suction shaft 3. Therefore, the material 8 can also complete circumferential rotation while performing axial movement, that is, the material 8 can also be adjusted in angle while being adjusted in height, which realizes the integration of the height and angle adjustment of the material 8 and greatly improves the production efficiency of the transfer apparatus. Both actions are realized by the same suction shaft 3, which simplifies the structure of the transfer apparatus. In this process, the first limit member 34 and the second limit member 51 limit each other to realize the assembly and connection between the lifting assembly 5 and the suction shaft 3. The rolling contact between the suction shaft 3 and the lifting assembly 5 can effectively reduce the friction between the suction shaft 3 and the lifting assembly 5 when the suction shaft 3 performs circumferential rotation, which is conducive to improving the sensitivity of the circumferential rotation of the suction shaft 3 and ensuring the accuracy of the circumferential rotation of the suction shaft 3, that is, the angle adjustment on the material 8.

In this embodiment, the platform 7 may be a conveyor belt.

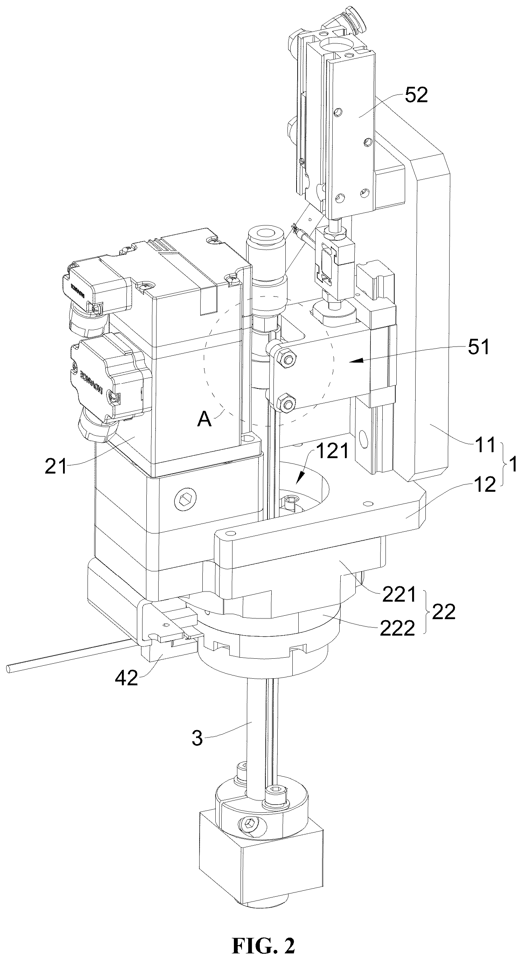

Exemplarily, as shown in FIG. 2 to FIG. 4, the second limit member 51 includes a body 510 and two rolling elements 515 are arranged on the body 510 in the axial direction of the suction shaft 3. The first limit member 34 is located between the two rolling elements 515 and is in rolling abutment against the two rolling elements 515. The two rolling elements 515 arranged in the axial direction of the suction shaft 3 may limit the first limit member 34 in the axial direction of the suction shaft 3 to ensure that the rotating assembly 2 will not be separated from the suction shaft 3 while driving the suction shaft 3 in the axial direction of the suction shaft 3, and moreover, during the rotation of the suction shaft 3, there is rolling friction between the first limit member 34 and the rolling elements 515, and the resistance is small.

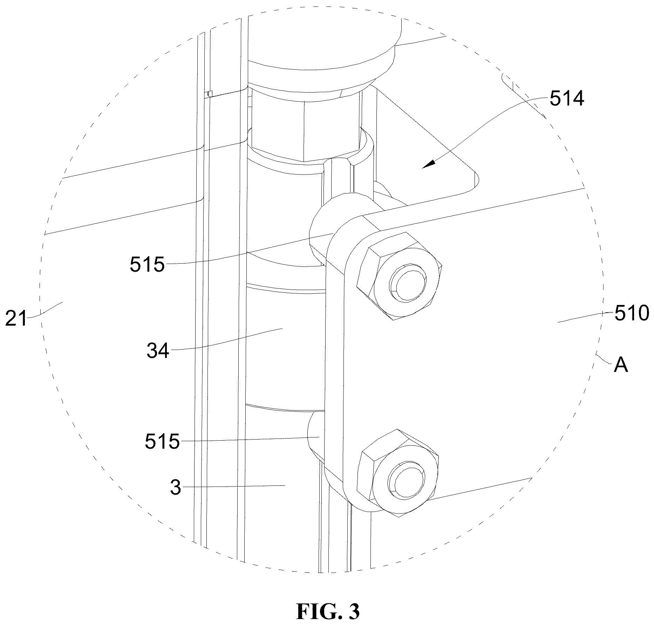

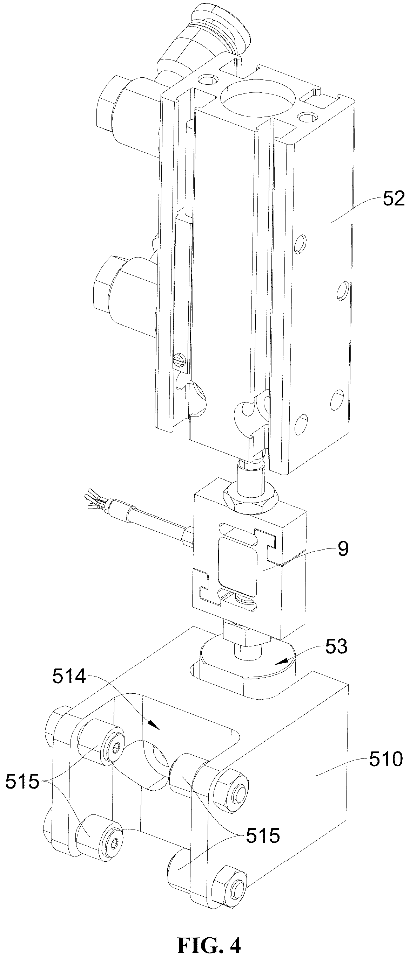

In order to improve the stability of the suction shaft 3 during the movement, as shown in FIG. 3 and FIG. 4, the body 510 includes a notch groove 514 arranged on a side of the body 510 facing the suction shaft 3; the two rolling elements 515 are arranged on each of two opposite inner walls of the notch groove 514 in the axial direction of the suction shaft 3; and the suction shaft 3 is at least partially located in the notch groove 514. By setting the rolling elements 515 in the notch groove 514 and assembling the suction shaft 3 to be at least partially into the notch groove 514, in one aspect, the structural compactness of the transfer apparatus can be improved and the space occupied by the transfer apparatus can be reduced; and in another aspect, the suction shaft 3 can be effectively prevented from interfering with other components during movement. The wall of the notch groove 514 can play a role in safety protection for the connection structure between the first limit member 34 and the rolling elements 515.

In this embodiment, a pressure-bearing plane is provided at the position of the first limit member 34 where the first limit member 34 abuts against the rolling element 515, and the pressure-bearing plane is perpendicular to the axial direction of the suction shaft 3; and the rolling elements 515 are in rolling abutment against the pressure-bearing plane. During use, when the rotating assembly 2 drives the suction shaft 3 to rotate, by taking the pressure-bearing plane as a reference, the rolling elements 515 do not jump in the axial direction of the suction shaft 3 during the rolling movement relative to the pressure-bearing plane. Correspondingly, during the rotation of the suction shaft 3, the suction shaft 3 does not jump relative to the rolling elements 515 in the axial direction of the suction shaft 3, which is conducive to improving the running stability of the transfer apparatus and the rotation accuracy of the suction shaft 3.

In one or more embodiments, the first limit member 34 is a fixed ring sleeved on the suction shaft 3. The fixed ring is a circular ring, and the two end faces of the fixed ring in the axial direction of the suction shaft 3 are pressure-bearing planes.

Optionally, the fixed ring is fixed to the suction shaft 3 by a set screw. In this way, the position adjustment of the fixed ring in the axial direction of the suction shaft 3 can be realized, which is convenient for use. In some embodiments, the fixed ring can be integrally arranged on the suction shaft 3. Moreover, the end faces of the fixed ring are used as the pressure-bearing planes, which facilitates the processing of the pressure-bearing planes and can better ensure the flatness of the pressure-bearing planes.

The fixed ring is coaxially arranged with the suction shaft 3, and the rotation axis of each of the rolling elements 515 intersects the central axis of the suction shaft 3 perpendicularly. Such a configuration can make the force parallel to the pressure-bearing plane applied to the rolling element 515 at the contact point with the pressure-bearing plane perpendicular to the rotation axis of the rolling element 515, that is, the pressure-bearing plane does not exert force on the rolling element 515 in the axial direction of the rotation axis of the rolling element 515, also that is, when the fixed ring or the suction shaft 3 rotates, the force parallel to the pressure-bearing plane applied to the rolling element 515 by the pressure-bearing plane is all used to drive the rolling element 515 to rotate around its rotation axis, so as to ensure that the rolling element 515 is not subjected to external force in the axial direction of its rotation axis, extend the service life of the rolling element 515, ensure the stability and accuracy of the rotation of the suction shaft 3, and avoid the phenomenon of the rolling element 515 being stuck due to poor rotation.

In this embodiment, the lifting assembly 5 further includes a telescopic member 52, a fixed end of the telescopic member 52 is connected to the frame 1, and a telescopic end of the telescopic member 52 is connected to the second limit member 51; and the second limit member 51 is slidably connected to the frame 1. Exemplarily, as shown in FIG. 1 and FIG. 2, the telescopic member 52 is fixedly mounted on the frame 1, and the second limit member 51 is driven by the telescopic end to drive the first limit member 34, that is, the suction shaft 3, to move in the axial direction of the suction shaft 3. The structural design of the second limit member 51 being slidably connected to the frame 1 can improve the structural stability of the second limit member 51 during the process of being driven by the telescopic member 52, thereby facilitating the improvement of the stability and precision of the axial movement of the suction shaft 3.

Optionally, the telescopic member 52 includes a cylinder, a hydraulic cylinder or an electric push rod. The telescopic direction of the telescopic end of the telescopic member 52 is parallel to the axial direction of the suction shaft 3, and the sliding direction of the second limit member 51 is parallel to the axial direction of the suction shaft 3.

In this embodiment, the frame 1 includes a vertical plate 11 and a horizontal plate 12 connected to each other, the vertical plate 11 is perpendicular to the horizontal plate 12; the axial direction of the suction shaft 3 is perpendicular to the horizontal plate 12; and a fixed end of the telescopic member 52 is fixedly mounted on the vertical plate 11, and the second limit member 51 is slidably connected to the vertical plate 11. The second limit member 51 is slidably connected to the frame 1 through a sliding member 54. The sliding member 54 includes a slide rail 542 and a slider 541 adapted to the slide rail 542, the slide rail 542 is arranged on the frame 1, and the slider 541 is arranged on the second limit member 51. Exemplarily, the sliding member 54 includes the slide rail 542 and the slider 541. As shown in FIG. 1 and FIG. 2, a slide rail 542 is arranged on the vertical plate 11, the extension direction of the slide rail 542 is parallel to the axial direction of the suction shaft 3, and the second limit member 51 is slidably connected to the slide rail 542. Exemplarily, a slider 541 adapted to the slide rail 542 is slidably mounted on the slide rail 542, and the slider 541 is fixedly connected to the second limit member 51. That is, the second limit member 51 is slidably connected to the slide rail 542 through the slider 541.

In some embodiments, the slider 541 can be integrally formed with the second limit member 51, that is, the second limit member 51 is directly slidably connected to the slide rail 542.

In this embodiment, the rotating assembly 2 is mounted on the horizontal plate 12, and the horizontal plate 12 is provided with an installation notch 121 so that the suction shaft 3 can pass through the horizontal plate 12.

In one or more embodiments, a buffer member 53 is provided between the telescopic end of the telescopic member 52 and the second limit member 51. The buffer member 53 applies a damping force to the telescopic end of the telescopic member 52 in response to the telescopic end of the telescopic member 52 driving the suction shaft 3 to approach and contact the material 8. The buffer 53 here can form a buffer between the telescopic end and the second limit member 51. In other words, the buffer 53 can make the second limit member 51 have a buffering and damping effect. In the process of the telescopic member 52 driving the suction shaft 3 through the second limit member 51 to approach and contact the material 8, the negative pressure suction head 33, that is, the suction shaft 3, is prevented from having a hard contact with the material 8, thereby avoiding damage to the material 8. Moreover, the negative pressure suction head 33 can better fit with the material 8 without damaging the material 8, thereby ensuring the firmness of the negative pressure suction head 33 in suctioning the material 8.

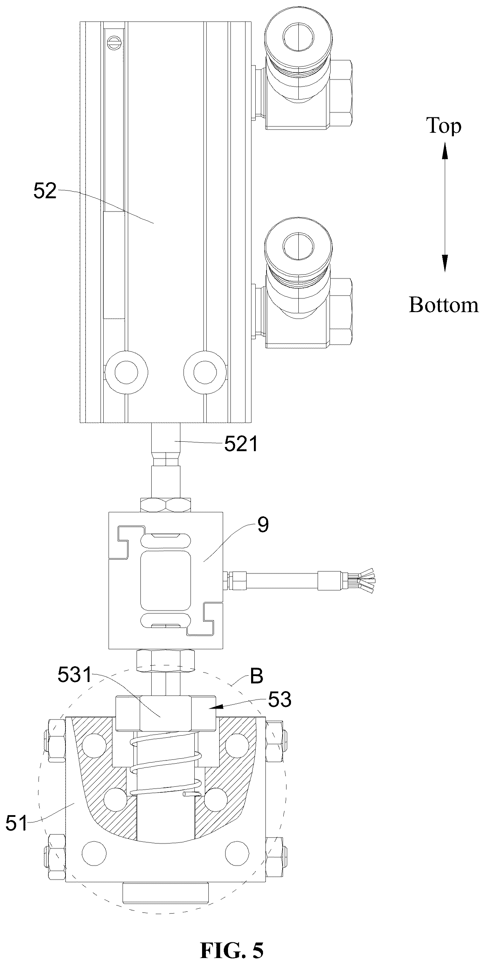

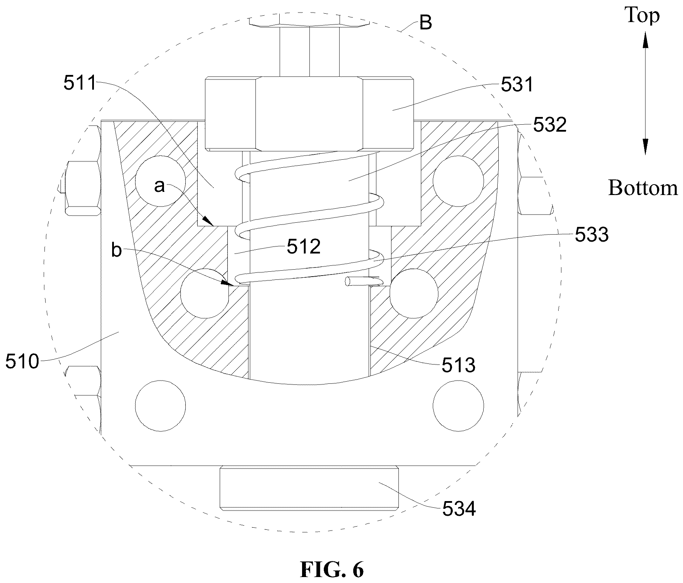

In one or more embodiments, as shown in FIG. 5 and FIG. 6, the buffer member 53 includes a guide shaft 532, an elastic element 533, a first locking block 531 and a second locking block 534. The guide shaft 532 passes through and is slidably connected to the second limit member 51, the guide shaft 532 is connected to the telescopic end of the telescopic member 52, an axial direction of the guide shaft 532 is parallel to a telescopic direction of the telescopic end of the telescopic member 52. The first locking block 531 and the second locking block 534 are both arranged on the guide shaft 532, the first locking block 531 is arranged on a side of the guide shaft 532 close to the telescopic member 52, and the second limit member 51 is arranged between the first locking block 531 and the second locking block 534. The elastic element 533 is arranged between the first locking block 531 and the second limit member 51. The first locking block 531 and the second locking block 534 here are arranged to axially limit the guide shaft 532 to ensure that the guide shaft 532 does not separate from the second limit member 51 during use. When in use, in response to the telescopic member 52 driving the suction shaft 3 through the second limit member 51 to move downward and approach and contact the material 8, the suction shaft 3 reacts to the second limit member 51, so that the second limit member 51 moves upward relative to the guide shaft 532 to compress the elastic element 533, thereby achieving the objective of buffering.

Optionally, the elastic element 533 is a spring which is sleeved on the guide shaft 532.

As shown in FIG. 6, the second limit member 51, that is, the body 510, is provided with a stepped hole on a side of the second limit member 51 facing the first locking block 531. The stepped hole includes a first hole section 511, a second hole section 512 and a third hole section 513 whose inner diameters decrease successively from top to bottom. The elastic element 533 is at least partially in the stepped hole. The guide shaft 532 passes through the second limit member 51, that is, the body 510, via the stepped hole, and the guide shaft 532 is slidably connected to an inner wall of the third hole section 513. A first step surface a is formed between the first hole section 511 and the second hole section 512 and is configured to limit the first locking block 531, and a second step surface b is formed between the second hole section 512 and the third hole section 513 and is configured to limit the elastic element 533 (spring).

Optionally, the first locking block 531 and the second locking block 534 are both threadedly connected to the guide shaft 532. The telescopic end of the telescopic member 52 is fixedly connected to the first locking block 531.

In this embodiment, when the telescopic member 52 is in a normal state (the length of the telescopic member 52 in a normal state is the length of the suction shaft 3 when the suction shaft 3 does not abut against the material 8), the first locking block 531 is at least partially in the first hole section 511. This arrangement ensures that there is no interference between the first locking block 531 and the second limit member 51, that is, the body 510 during use.

In a radial direction of the guide shaft 532, the maximum size of the first locking block 531 is greater than the inner diameter of the first hole section 511; and the maximum size of the second locking block 534 is greater than the inner diameter of the third hole section 513. In this way, the first locking block 531 can be prevented from being stuck by the first hole section 511 during use, and the second locking block 534 can be prevented from being stuck by the third hole section 513.

Through the cooperation of the elastic element 533, i.e., the spring and the stepped hole, the structure of the buffer member 53 can be compressed and designed inside the second limit member 51, i.e., the body 510, which reduces the volume of the transfer apparatus and improves the compactness of the structure of the transfer apparatus.

In this embodiment, a force control sensor 9 is provided between the telescopic end of the telescopic member 52 and the guide shaft 532. The telescopic member 52 includes a telescopic shaft 521 connected to the force control sensor 9, the telescopic end of the telescopic member 52 is an end of the telescopic shaft 521 close to the force control sensor 9, and the telescopic shaft 521 is coaxial with the guide shaft 532. The force control sensor 9 here is configured to implement monitoring of the force value, mainly the pressure value, between the telescopic member 52 and the guide shaft 532 during use, so as to prevent the suction shaft 3, i.e., the negative pressure suction head 33, from over-pressing the material 8. The coaxial arrangement of the telescopic shaft 521 and the guide shaft 532 can avoid the generation of a turning torque between the telescopic shaft 521 and the guide shaft 532 during use which may adversely affect the monitoring accuracy of the force control sensor 9.

As shown in FIG. 1 and FIG. 2, the rotating assembly 2 includes a motor 21 and a hollow reducer 22. The hollow reducer 22 includes a housing 221, an input shaft, and a hollow output shaft 222. The input shaft and the hollow output shaft 222 are rotatably connected to the housing 221, and the housing 221 is mounted to the frame 1 which can be the horizontal plate 12. An output shaft of the motor 21 is connected to an input hole of the hollow reducer 22. The suction shaft 3 is a spline shaft and is coaxial with the hollow output shaft 222 and is embedded in the hollow output shaft 222. A spline nut 31 is fixed on the hollow output shaft 222 and is assembled to the suction shaft 3. In this way, the hollow output shaft 222 can be driven to rotate by the motor 21, to meet the requirements of the axial movement of the suction shaft 3 while driving the suction shaft 3 to rotate circumferentially through the spline nut 31.

In this embodiment, a connecting plate 32 is provided between the hollow output shaft 222 and the spline nut 31, and a photosensitive plate 43 is provided on the connecting plate 32. A mounting plate 41 is provided on the housing 221 and is configured to install a photoelectric switch 42 that cooperates with the photosensitive plate 43. The rotation angle of the suction shaft 3 is monitored by the photoelectric switch 42 in cooperation with the photosensitive plate 43. In some embodiments, the photosensitive plate 43 can also be arranged on the hollow output shaft 222 or the spline nut 31. The photoelectric switch 42 can also be arranged on the frame 1 or the motor 21.

The technical means applicable in the solutions of the present application are not limited to the technical solutions disclosed in the above-described embodiments, but further include technical solutions composed of any combination of the above technical features. It should be pointed out that for the person of ordinary skills in the art, without departing from the principle of this application, several improvements and modifications can be made, and these improvements and modifications are also regarded as the protection scope of this application.

## Claims

1. A material transfer apparatus, comprising:
a frame (1);
a suction shaft (3) adjustably assembled on the frame (1) and provided with a first limit member (34);
a rotating assembly (2) arranged on the frame (1) and configured to drive the suction shaft (3) to rotate in a circumferential direction of the suction shaft (3); and
a lifting assembly (5) arranged on the frame (1) and configured to drive the suction shaft (3) to move in an axial direction of the suction shaft (3) to approach or move away from a material (8), wherein the lifting assembly (5) comprises a second limit member (51) movably arranged on the frame (1), and the second limit member (51) and the first limit member (34) are configured to be in rolling contact and mutually limited in the axial direction of the suction shaft (3).

2. The material transfer apparatus according to claim 1, wherein,
the second limit member (51) comprises a body (510) and two rolling elements (515) arranged on the body (510) in the axial direction of the suction shaft (3), and
the first limit member (34) is located between the two rolling elements (515) and is configured to be in rolling abutment against the two rolling elements (515).

3. The material transfer apparatus according to claim 2, wherein the body (510) comprises a notch groove (514) arranged on a side of the body (510) facing the suction shaft (3); wherein,
the two rolling elements (515) are arranged on each of two opposite inner walls of the notch groove (514) in the axial direction of the suction shaft (3); and the suction shaft (3) is at least partially located in the notch groove (514).

4. The material transfer apparatus according to claim 2 or 3, wherein the first limit member (34) is a fixed ring sleeved on the suction shaft (3).

5. The material transfer apparatus according to any one of claims 1 to 3, wherein,
the lifting assembly (5) further comprises a telescopic member (52), a fixed end of the telescopic member (52) is connected to the frame (1), and a telescopic end of the telescopic member (52) is connected to the second limit member (51); and
the second limit member (51) is slidably connected to the frame (1).

6. The material transfer apparatus according to claim 5, further comprising a buffer member (53) arranged between the telescopic end of the telescopic member (52) and the second limit member (51),
wherein the buffer member (53) is configured to apply a damping force to the telescopic end of the telescopic member (52) in response to the telescopic end of the telescopic member (52) driving the suction shaft (3) to approach and contact the material (8).

7. The material transfer apparatus according to claim 6, wherein the buffer member (53) comprises a guide shaft (532), an elastic element (533), a first locking block (531) and a second locking block (534), wherein,
the guide shaft (532) is configured to pass through and be slidably connected to the second limit member (51), the guide shaft (532) is configured to be connected to the telescopic end of the telescopic member (52), an axial direction of the guide shaft (532) is parallel to a telescopic direction of the telescopic end of the telescopic member (52);
the first locking block (531) and the second locking block (534) are both arranged on the guide shaft (532), the first locking block (531) is arranged on a side of the guide shaft (532) close to the telescopic member (52), and the second limit member (51) is arranged between the first locking block (531) and the second locking block (534); and
the elastic element (533) is arranged between the first locking block (531) and the second limit member (51).

8. The material transfer apparatus according to claim 7, further comprising a force control sensor (9) arranged between the telescopic end of the telescopic member (52) and the guide shaft (532).

9. The material transfer apparatus according to claim 7, wherein the second limit member (51) is provided with a stepped hole on a side of the second limit member (51) facing the first locking block (531), and the guide shaft (532) is configured to pass through the second limit member (51) via the stepped hole; and
the elastic element (533) is at least partially located in the stepped hole.

10. The material transfer apparatus according to claim 9, wherein the stepped hole comprises a first hole section (511), a second hole section (512) and a third hole section (513) whose inner diameters decrease successively; and
the guide shaft (532) is configured to be slidably connected to an inner wall of the third hole section (513), a first step surface (a) is formed between the first hole section (511) and the second hole section (512) and is configured to limit the first locking block (531), and a second step surface (b) is formed between the second hole section (512) and the third hole section (513) and is configured to limit the elastic element (533).

11. The material transfer apparatus according to claim 8, wherein the telescopic member (52) comprises a telescopic shaft (521) connected to the force control sensor (9), the telescopic end of the telescopic member (52) is an end of the telescopic shaft (521) close to the force control sensor (9), and the telescopic shaft (521) is coaxial with the guide shaft (532).

12. The material transfer apparatus according to claim 1, wherein,
the rotating assembly (2) comprises a motor (21) and a hollow reducer (22), the hollow reducer (22) comprises a housing (221), an input shaft, and a hollow output shaft (222); the input shaft and the hollow output shaft (222) are rotatably connected to the housing (221), and the housing (221) is mounted to the frame (1);
an output shaft of the motor (21) is configured to be connected to the input shaft of the hollow reducer (22);
the suction shaft (3) is a spline shaft and is coaxial with the hollow output shaft (222) and is configured to be embedded in the hollow output shaft (222); and
a spline nut (31) is fixed on the hollow output shaft (222) and is configured to be assembled to the suction shaft (3).

13. The material transfer apparatus according to claim 12, further comprising:
a photosensitive plate (43) arranged on the hollow output shaft (222) or the spline nut (31); and
a photoelectric switch (42) arranged on the frame (1), the housing (221), or the motor (21) and configured to cooperate with the photosensitive plate (43).

14. The material transfer apparatus according to claim 1, further comprising a sliding member (54), wherein,
the second limit member (51) is slidably connected to the frame (1) through the sliding member (54); and
the sliding member (54) comprises a slide rail (542) and a slider (541) adapted to the slide rail (542), the slide rail (542) is arranged on the frame (1), and the slider (541) is arranged on the second limit member (51).
